# EUROPÄISCHE PATENTSCHRIFT

(11) **EP 0 995 157 B1**
(45) Veröffentlichungstag und Bekanntmachung des Hinweises auf die Patenterteilung: **01.10.2003**
(21) Anmeldenummer: 99934508.5
(22) Anmeldetag: 17.05.1999
(51) Int. Cl.: G06F 17/17

(54) **VERFAHREN ZUR REDUKTION DES DATENDURCHSATZES BEI DER ÜBERTRAGUNG VON OBJEKTBEZOGENEN DATEN ZWISCHEN INNERHALB VON ZEITBEDINGUNGEN KOMMUNIZIERENDEN RECHENELEMENTEN**
METHOD FOR REDUCING DATA RATE DURING TRANSMISSION OF OBJECT-RELATED DATA BETWEEN TWO COMPUTER ELEMENTS COMMUNICATING WITHIN TIME LIMITS
PROCEDE POUR REDUIRE LE DEBIT BINAIRE LORS DE LA TRANSMISSION DE DONNEES OBJET ENTRE DES ELEMENTS DE CALCUL COMMUNIQUANT A L'INTERIEUR DE CONDITIONS TEMPORELLES

(30) Priorität: 18.05.1998 DE 19822211
(43) Veröffentlichungstag der Anmeldung: 26.04.2000
(73) Patentinhaber: EADS Deutschland GmbH, 85521 Ottobrunn (DE)
(72) Erfinder: NEUHAUSER, Johann, D-83052 Bruckmühl (DE); HARTUNG, Diedrich, D-80639 München (DE); GRÄSSEL, Florian, D-81737 München (DE); HANSEN, Ronald, D-85521 Ottobrunn (DE)
(86) Internationale Anmeldenummer: DE9901474
(87) Internationale Veröffentlichungsnummer: WO99060490

(56) Entgegenhaltungen:
- EP-A- 0 404 381
- WO-A-98/12687
- JP-A- 10 108 151
- US-A- 4 855 822
- US-A- 5 689 161
- US-A- 5 808 921

## Beschreibung

Die Erfindung betrifft ein Verfahren zur Reduktion des Datendurchsatzes bei der Übertragung von objektbezogenen Daten zwischen innerhalb von Zeitbedingungen, insbesondere in Real- oder Echtzeit kommunizierenden Rechenelementen, sowie eine Einrichtung zur Durchführung dieses Verfahrens.

Bei Rechnereinheiten wie in JP-A-10 108 151 beschrieben die in Realzeit miteinander kommunizieren, stellen die maximalen Bandbreiten oder Übertragungsraten der für die Kommunikation verwendeten Datenübertragungseinrichtungen einschließlich des dafür vorgesehenen Protokolls einen Engpaß beim Datenaustausch zwischen diesen Rechnereinheiten dar. Üblicherweise werden Datenmengen, die diese maximalen Bandbreiten überschreiten, bei der Übertragung gestrichen oder verzögert, wobei der sendende Computer keine Informationen sowohl über das Abschneiden oder die Verzögerung von Datenmengen als auch darüber hat, welcher Teil der Datenmenge nicht übertragen worden ist. Dadurch hat die sendende Rechnereinheit selbst also keine Kontrolle darüber, welche Daten die empfangende Rechnereinheit erhalten hat. Es ist daher von Nachteil, daß im Stand der Technik im Wesentlichen nur die Möglichkeit besteht, entweder diese Ungewißheit zu tolerieren oder einen zusätzlichen Verwaltungsaufwand in bezug auf die Datenübertragungssicherheit in Kauf zu nehmen, um eine Kontrolle der an die empfangende Rechnereinheit übertragenen Daten zu erreichen. Nach dem Stand der Technik werden diese Nachteile dadurch überwunden, daß verhältnismäßig aufwendige und damit teure Datenübertragungseinrichtungen mit großer Übertragungsbandbreite verwendet werden.

Es ist daher eine Aufgabe der Erfindung, ein Verfahren zur Datenübertragung zwischen unter Zeitbedingungen kommunizierenden Rechnereinheiten zu schaffen, durch das die zwischen den Rechnereinheiten auszutauschenden Datenmengen minimal werden, während gleichzeitig die Informationen über die jeweils angeschlossenen Rechnereinheiten, die bei den im Austausch stehenden Rechnereinheiten vorliegen, erhalten bleiben sollen.

Diese Aufgabe wird mit den Merkmalen des Anspruchs 1 gelöst. Weitere Ausführungsbeispiele sind in den Unteransprüchen angegeben.

Um zu entscheiden, ob der sendende Kommunikationsrechner in einem Übertragungsschritt Daten in Bezug auf ein Objekt an einen anderen Kommunikationsrechner eines anderen Benutzerbereichs zu senden hat, wird zumindest ein auf beiden im Datenaustausch stehenden Kommunikationsrechnern laufendes Extrapolationsverfahren verwendet. Im jeweils sendenden Kommunikationsrechner werden die laufend aktuellen Daten, über deren Versenden zu entscheiden ist und mit denen der jeweils sendende Kommunikationsrechner von den diesem zugeordneten externen Einheiten versorgt wird, mit den von diesem extrapolierten Daten verglichen. Da auch im empfangenden Kommunikationsrechner auf diesselbe Weise extrapolierte Daten vorliegen und in den diesem zugeordneten externen Einheiten verwendet werden, hat der sendende Kommunikationsrechner unter Berücksichtigung des jeweils auftretenden Übertragungsweges Informationen darüber, welche Daten in dem empfangenden Benutzerbereich vorliegen. Auf dieser Basis und dem Vergleich extrapolierter mit aktuellen Daten entscheidet der jeweils sendende Kommunikationsrechner über ein Versenden von Daten an den empfangenden Benutzerbereich. Um diese Extrapolationsverfahren effizient zu gestalten, werden die Eigenschaften von Objekten, mit denen die zu übertragenden Daten beschrieben werden, derart in entsprechenden Formaten strukuriert, daß einerseits die zu beschreibenden Objekte mit möglichst wenig Datenaufwand beschrieben werden, und andererseits die anzuwendenden Extrapolationsverfahren hinsichtlich der Rechenzeit möglichst effizient sind. Dadurch werden die pro Zeiteinheit zu übertragenden Datenmengen deutlich reduziert. Weiterhin kann die Qualität der durch das System bearbeiteten Objekte und damit die Komplexität oder Genauigkeit der Anlage oder die Anzahl der beschriebenen Objekte erhöht werden, wenn im Vergleich zum Stand der Technik gleiche Datenmengen übertragen werden.

Die Vergleichswerte aus den aktuellen und den extrapolierten Datensätzen werden zur Entscheidung für die Übertragung mit Schwellwerten verglichen. Zusammen mit einer laufend aktualisierten Prioritätenliste, durch die eine Reihenfolge und damit ein Übertragungszeitpunkt der zu übertragenden Daten festgelegt wird, legen diese Schwellwerte einen maximalen Übertragungsfehler fest.

Die erfindungsgemäße Einrichtung zur Datenübertragung hat insbesondere auch den Vorteil, daß für die Kommunikation zwischen große Datenmengen produzierenden Rechnersystemen der Einsatz kostengünstiger Datenübertragungs-Einrichtungen mit verhältnismäßig geringen Übertragungs-Bandbreiten möglich ist.

Im folgenden wird die Erfindung anhand der beigefügten Figuren beschrieben. Es zeigen:
- Fig. 1: das erfindungsgemäße Rechnersystem mit zwei Benutzerbereichen und einer Datenübertragungsleitung und
- Fig. 2: ein Simulationssystem mit ebenfalls zwei Benutzerbereichen als einen Anwendungsfall der Erfindung.

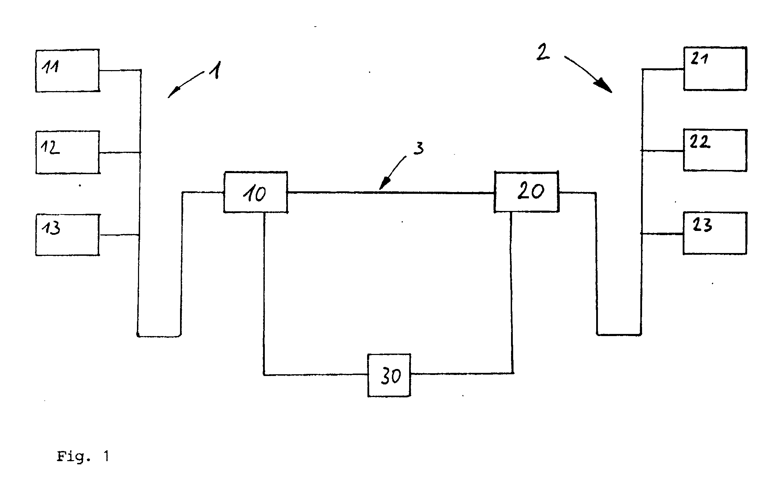

Die Fig. 1 zeigt ein Rechnersystem mit einem ersten Benutzerbereich 1 und einem zweiten Benutzerbereich 2, die über eine Datenübertragungseinrichtung 3 miteinander verbunden sind, wobei die Datenverarbeitungseinrichtung 3 auch Speichermedien umfassen kann. In dem ersten Benutzerbereich 1 ist an die Datenübertragungseinrichtung 3 ein Kommunikationsmodul oder einKommunikationsrechner 10 angeschlossen, der über entsprechende Signal- oder Datenübertragungsleitungen mit externen Einheiten 11, 12, 13, die Rechnereinheiten oder auch ein Bandgerät sein können, verbunden ist. Ebenso, ist im zweiten Benutzerbereich 2 ein an die Datenübertragungseinrichtung 3 angeschlossenes Kommunikationsmodul oder angeschlossener Kommunikationsrechner 20 vorgesehen, der ebenfalls über entsprechende Signal- oder Datenübertragungsleitungen mit externen Einheiten 21, 22, 23 des zweiten Benutzerbereiches 2 verbunden ist. Die externen Einheiten 11, 12, 13 und 21, 22, 23 erzeugen fortlaufend Daten, die diese an die jeweiligen Komunikationsrechner 10 bzw. 20 übergeben, wobei die Datenerzeugung unabhängig von den Kommunikationsrechnern 10 bzw. 20 sein kann. Die Kommunikationsrechner 10, 20 kommunizieren miteinander unter Zeit-Bedingungen, d.h. diese tauschen Daten, die diese von den jeweils zugeordneten externen Einheiten 11, 12, 13 bzw. 21, 22, 23 erhalten haben, gegenseitig aus, wobei die Kommunikationsrechner 10, 20 mit einem Zeitgeber 30 verbunden sind. Weiterhin können die Kommunikationsrechner 10, 20 Funktionen aufweisen, die zumindest Teile der Kommunikation zwischen externen Einheiten steuern.

Wenn beispielsweise der Kommunikationsrechner 10 von den mit ihm verbundenen externen Einheiten 11, 12, 13 Daten empfängt, die an den Kommunikationsrechner 20 über die Datenübertragungseinrichtung 3 übertragen werden sollen, werden diese Daten über die Datenübertragungseinrichtung 3 aufgrund eines vorgegebenen Datenübertragungs-Protokolls in Form von Datensätzen oder Datensatzpaketen eines bestimmten Übertragungsformats übertragen. Die Datenübertragungseinrichtung 3 weist eine begrenzte Bandbreite auf. Diese kann resultieren aus dem maximalen Datendurchsatz des jeweiligen Übertragungskanals, z.B. einer Datenleitung oder einer Funkverbindung, der Speichergröße einer zugeordneten Speicher-Einrichtung oder der Datenverarbeitungs-Geschwindigkeit der für die Datenübertragung vorgesehenen Datenverarbeitungs-Einrichtungen, z.B. eines Krypters. Bei den erzeugten bzw. ausgetauschten Daten handelt es sich vorzugsweise um objektorientierte Daten, d.h. Daten, die Objekte oder Eigenschaften von Objekten beschreiben.

Erfindungsgemäß wird bei diesen Übertragungsformaten unterschieden zwischen über die Übertragungsschritte veränderlichen und über diese unveränderlichen oder quasi-statischen Daten. Dabei kann es sich sowohl um Zahlengrößen als auch um logische Werte handeln. Die quasi-statischen Daten umfassen beispielsweise Daten, die über die Zeit gleichbleibende Eigenschaften von Objekten beschreiben, während die über die Übertragungsschritte veränderlichen Daten beispielsweise das zeitveränderliche Verhalten dieser Objekte beschreiben. Die quasi-statischen Daten müssen nur zu Beginn des gesamten Übertragungsprozesses und zu den verhältnismäßig seltenen Zeitpunkten, an denen diese sich verändern, übertragen werden. Deshalb ist eine Einrichtung oder Funktion in den jeweils sendenden Kommunikationsrechnern 10, 20 vorgesehen, die feststellt, ob sich ein Typ von quasi-statischen Daten verändert hat und die in diesem Fall die Übertragung der entsprechenden quasi-statischen Daten vorsieht. Darüber hinaus kann der jeweils sendende Kommunikationstrechner 10, 20 die Übertragung quasi-statischer Daten initiieren und bewirken, falls dieser festgestellt hat, daß noch ein ausreichendes Maß an Übertragungs-Bandbreite für den betreffenden Übertragungsschritt in der Datenübertragungseinrichtung 3 zur Verfügung steht.

Die veränderlichen Daten werden in Anwendungs- oder Objekt-spezifischen Formaten für die Datensätze beschrieben. Für die zu übertragenden Daten liegen Extrapolationsverfahren in den im Austausch stehenden Kommunikationsrechnern 10, 20 vor. Diese können eine Abschätzung der in den diesen zugeordneten externen Einheiten implementierten Funktionen darstellen oder stellen eine Hochrechnung zeitlich neuer Werte auf der Basis alter Werte dar. Diese Extrapolationsverfahren können analog zu den in den externen Einheiten vorgesehenen Funktionen mathematische oder auch logische Funktionen, z.B. Datenbankfünktionen sein. Mit den Extrapolationsverfahren können die Daten, die zur Zeit eines Übertragungsschrittes in einem Kommunikationsrechner 10, 20 vorliegen, für die Zeit eines späteren Zeitpunktes bestimmt werden. Die in einem Kommunikationsrechner 10, 20 vorgesehenen Extrapolationsverfahren hängen von der Anzahl und Art der Funktionen ab, die in den diesem Kommunikationsrechner zugeordneten externen Einheiten 11, 12, 13 bzw. 21, 22, 23 implementiert sind. Sie können jedoch auch unabhängig von den Funktionen der externen Einheiten 11, 12, 13 bzw. 21, 22, 23 nach allgemeinen Prinzipien gestaltet sein. Die in einem Kommunikationsrechner eines Benutzerbereichs jeweils implementierten Extrapolationsverfahren dienen dazu, für die externen Einheiten im jeweils empfangenden Benutzerbereich, parallel zu der Erzeugung aktueller Daten aufgrund spezifischer Funktionen in den externen Einheiten des sendenden Benutzerbereichs, Werte für die externen Einheiten des empfangenden Benutzerbereichs zu berechnen. Durch die Extrapolationen im empfangenden Benutzerbereich werden Werte oder Daten für Zeitpunkte ermittelt, für die in den externen Einheiten des sendenden Benutzerbereichs die jeweils aktuellen Daten aufgrund spezifischer Funktionen ermittelt werden.

Bei der Zeitgröße, die der Extrapolation zugrundeliegt, wird die Übertragungszeit der Daten vom sendenden 10 zum empfangenden 20 Kommunikationsrechner berücksichtigt. Dabei wird beim sendenden Kommunikationsrechner eine z.B. vorab ermittelte Übertragungszeit verwendet. Beim empfangenden Kommunikationsrechner 20 wird die beim jeweiligen Datensatz aufgetretene Übertragungszeit durch einen Zeitstempel, mit dem der sendende Kommunikationsrechner 10 den zu versendenden Datensatz aufgrund eines entsprechenden Signals des Zeitgebers 30 zum Absendezeitpunkt versehen hat, und durch die von dem Zeitgeber 30 für den Empfangszeitpunkt gegebene absolute Zeit ermittelt. Diese tatsächliche Übertragungszeit wird vorzugsweise wiederum an den Kommunikationsechner, der die Daten gesendet hat, übermittelt und später bei der Schätzung der Übertragungszeit durch den sendenden Kommunikationsrechner verwendet. Die Extrapolationsverfahren sind auf die Daten oder auch auf die entsprechenden Datensatz-Formate der Anwendung oder deren Objekte und umgekehrt hinsichtlich der Rechenzeit optimiert oder angepaßt. Die Extrapolationsverfahren sind in den betreffenden Kommunikationsrechnern 10, 20 ständig, d.h. für die jeweilige Betriebsdauer des erfindungsgemäßen Rechnersystems, aktiv. Im jeweils sendenden Kommunikalionsrechner ist dasselbe Extrapolationsverfahren, das im empfangenden Kommunikationsrechner läuft, aktiv und wird dazu verwendet, diesselben Daten und damit Informationen darüber zu erzeugen, auf der Basis welcher Daten im jeweils empfangenden Benutzerbereich gearbeitet wird. Die aktuellen, an den empfangenden Kommunikationsrechner gesendeten bzw. die dort extrapolierten Daten dienen vorzugsweise als Eingangsdaten für die Funktionen, die in den externen Einheiten des jeweils empfangenden Benutzerbereichs implementiert sind.

Beispielsweise sendet der Kommunikationrechner 10 jeweils aktuelle Daten mit dem entsprechenden spezifischen Datensatz-Format, d.h. eine Gruppe von Datentypen, mit denen sich die mit den Daten zu beschreibenden Objekte effizient beschreiben lassen, an den empfangenden Kommunikationsrechner 20. Diese aktuellen Daten werden von den externen Einheiten, die dem sendenden Kommunikationsrechner zugeordnet sind und auf denen spezifische Anwendungsprogramme oder Funktionen vorzugsweise zur u.a. zeitveränderlichen Beschreibung von Objekten laufen, erzeugt und werden generell zumindest zum Teil von den Funktionen benötigt, die auf den externen Einheiten im jeweils empfangenden Benutzerbereich laufen. Daraufhin ermitteln sowohl der sendende 10 als auch der empfangende 20 Kommunikationsrechner unabhängig voneinander mit denselben spezifischen Extrapolationsverfahren. die auf Daten mit derselben durch den Zeitgeber 30 vorgegebenen Zeitbasis angewendet werden, Daten für einen späteren Zeitpunkt, z.B. für einen späteren Übertragungsschritt. Die vom empfangenden Kommunikationsrechner 20 durch Extrapolation gewonnenen Daten wie auch die von Zeit zu Zeit vom jeweils empfangenden Kommunikationsrechner 20 empfangenen Daten dienen als Eingangsgrößen für die objektorientierten Funktionen, die in den externen Einheiten des empfangenden Benutzerbereichs laufen. Unabhängig davon empfängt der sendende Kommunikationsrechner 10 von den ihm zugeordneten externen Einheiten 11, 12, 13, auf denen die Funktionen oder objektorientierten Anwendungsprogramme ablaufen, weitere aktuelle Daten, die für den jeweiligen Zeitpunkt den jeweiligen Daten entsprechen, die durch die entsprechende Extrapolation gewonnen worden sind bzw. werden.

Die aktuellen Daten werden im Kommunikationsrechner 10 mit den extrapolierten Daten verglichen. Parallel dazu arbeiten die im empfangenden Benutzerbereich ablaufenden Anwendungsprogramme oder Funktionen auf der Basis der zuletzt vom sendenden Benutzerbereich bzw. Kommunikationsrechner 10 erzeugten und an den empfangenden Kommunikationsrechner 20 übermittelten Daten oder auf der Basis der vom empfangenden Kommunikationsrechner 20 durch Extrapolation gewonnenen Daten. Überschreiten bei dem im sendenden Kommunikationsrechner 10 stattfindenden Vergleich die dadurch entstehenden Vergleichswerte einen Schwellwert, bei dem die vom sendenden Kommunikationsrechner 10 ermittelte Übertragungszeit berücksichtigt wird und der für jedes durch den jeweiligen Datensatz beschriebene Objekt oder ein damit im Zusammenhang stehendes Objekt eigens vor dem oder im Betrieb des Rechnersystems festgesetzt wird, wird eine Übertragung des aus diesen Daten gebildeten Datensatzes initiiert, d.h. eine Übertragung desselben vorgemerkt. Der empfangende Kommunikationsrechner 20 bezieht aufgrund der mittels des Zeitgebers 30 konkret ermittelten Übertragungszeit die jeweils empfangenen aktuellen Daten auf den Zeitpunkt, zu dem sie im sendenden Benutzerbereich bzw. dessen externen Einheiten erzeugt worden sind oder auf den sie sich beziehen. Durch die Berücksichtigung des Übertragungsweges kann der jeweils sendende Kommunikationsrechner 10 einen Vergleich der jeweils aktuellen Daten mit den Daten stattfinden, mit denen die Anwendungsprogramme der externen Einheiten 21, 22, 23 im empfangenden Benutzerbereich 2 arbeiten. Aufgrund dieses Vergleichs kann auch Aufschluß über die Genauigkeit gewonnen werden, mit der die Funktionen der externen Einheiten 21, 22, 23 laufen.

Zur Entscheidung, welche Daten tatsächlich vom sendenden Kommunikationsrechner 10 an den jeweils empfangenden Kommunikationsrechner 20 geschickt werden, ist eine Prioritätsliste vorgesehen, die von dem sendenden Kommunikationsrechner 10 laufend aktualisiert wird. Diese Prioritätsliste stellt eine Bewertung einer variablen Anzahl von Einträgen dar, die auf die zu versendenden Datensätze verweisen. Dabei werden die Daten bzw. die Inhalte selbst vorzugsweise nicht in diese Prioritätsliste eingetragen, wobei die Einträge lediglich Verweise auf die jeweiligen Datensätze sind. Mit der ständig zu aktualisierenden Prioritätsliste wird festgelegt, daß die Daten, auf die die Einträge jeweils verweisen, an den empfangenden Kommunikationsrechner 20 geschickt werden. Das Versenden geschieht in der Ordnung oder Reihenfolge, in der die Einträge in der Prioritätsliste eingetragen sind.

Die Ordnung oder Reihenfolge und damit die in Bezug auf die Funktionssicherheit gebotene Wertigkeit der Einträge bzw. der zugehörigen Datensätze in der Prioritätsliste wird durch vorgegebene Kriterien festgelegt, wobei beispielsweise maßgebend ist, für welchen Zeitraum die Daten eines bestimmten Datentyps nicht mehr beim Kommunikationsrechner 20 aktualisiert oder unabhängig von einer Aktualisierung versendet worden sind oder welche in Bezug auf die Funktionalität des gesamten Rechnersystems gegebene Bedeutung und Wichtigkeit den zu den Einträgen gehörenden Datensätzen von vornherein zugeordnet wird oder welche Größe die Datensätze besitzen. In der Ordnung oder Reihenfolge der Einträge der Prioritätsliste werden die Datensätze, auf die die jeweiligen Einträge verweisen, von dem jeweils sendenden Kommunikationsrechner 10 an den jeweils empfangenden Kommunikationsrechner 20 geschickt.

Aus der Summe der in der Prioritätsliste aufgerührten Einträge ermittelt der jeweils sendende Kommunikationsrechner 10 die Übertragungs-Bandbreite, die erforderlich ist, um die Funktionssicherheit des gesamten Rechnersystems zu gewährleisten. In dem Fall, daß diese erforderliche Übertragungs-Bandbreite die von der Datenübertragungs-Einrichtung 30 vorgegebene Bandbreite überschreitet, kann der jeweils sendende Kommunikationsrechner 10 geeignete Gegen-Maßnahmen ergreifen. Diese können umfassen: eine Erhöhung der physikalischen Bandbreite der Datenübertragungs-Einrichtung 30, z.B. durch Zuschalten einer weiteren Übertragurigsleitung oder die zeitweise Reduktion der für die Funktionalität des gesamten Rechnersystems erforderlichen Bandbreite durch die zeitweise Veränderung der Kriterien zur Bestimmung der Prioritätsliste, z.B. durch eine Erhöhung der durch die Schwellwerte gegebenen Toleranzgrenze.

Voranstehend wurde die Funktion der Datenübertragung für den Fall beschrieben, daß der Kommunikationsrechner 10 die sendende Einheit und der Kommunikationsrechner 20 die empfangenden Einheit ist. Gleichzeitig kann dieser Vorgang auch in der umgekehrten Richtung ablaufen. Außerdem können die beschriebenen Abläufe auch verwendet werden, wenn Daten zur Beschreibung verschiedener Objekte in der einen oder anderen Richtung versendet werden sollen.

Das erfindungsgemäße Rechnersystem kann auch mehr als zwei Benutzerbereiche aufweisen. Dabei kann ein oder mehrere Benutzerbereiche ein oder mehrere Kommunikationsrechner umfassen. Außerdem kann auch nur ein Kommunikationsrechner für mehrere Benutzerbereiche vorgesehen sein. Auch können an einem ersten Kommunikationsrechner ein oder mehrere weitere Kommunikationrechner angeschlossen sein, die dem ersten Kommunikationsrechner auch untergeordnet sein können.

Der Zeitgeber 30 hat die Funktion, den an ihm angeschlossenen Kommunikationsrechnem eine absolute, d.h. eine von dem Ablauf in den kommunizierenden Computern unabhängige Uhrzeit anzugeben. Diese Funktion kann mit anderen im Stand der Technik verfügbaren Mitteln erfüllt sein, z.B. durch Funkuhren.

Durch die Trennung von Daten in statische und dynamische Daten wird der Vorteil erreicht, daß der häufig zu verschickende Datensatz nur die stark zeitveränderlichen oder dynamischen Daten enthält, so daß die Datensatzgröße kleiner ist als der beim Stand der Technik mit jedem Übertragungsschritt versendete und mit den gleichen Inhalten versehene Datensatz. Dadurch wird die zu übertragende Datenmenge reduziert.

In einer alternativen Ausführungsform können auch mehrere Objekte mit einem Datensatz beschrieben werden.

Alternativ zu den beschriebenen Ausführungsformen können die Extrapolationsverfahren in den Kommunikationsmodulen 10, 20 oder - rechner verschiedenartig sein. Sie müssen jedoch geeignet sein, innerhalb des jeweiligen Kommunikationsmoduls 10, 20 ein Wissen über die im jeweils zugeordneten Kommunikationsmodul 10, 20 vorliegenden Informationen aufzubauen und verfügbar zu haben.

Die bei der Extrapolation in der bevorzugten Ausführungsform geschätzten bzw. ermittelten Übertragungszeiten für die Übertragung der Daten vom sendenden zum jeweils empfangenden Kommunikationsrechner- bzw. modul 10, 20 können auch weggelassen werden, wenn es die geforderte Gesamtgenauigkeit des erfindungsgemäßen Systems zuläßt.

Im jeweils empfangenden Kommunikationsmodul kann bei der Definition der Extrapolationszeit auch eine geschätzte Übertragungszeit verwendet werden.

Ein weiterer Vorteil ist. daß Datensätze generiert werden, die spezifisch für die simulierten Objekte sind. Diese Datensätze enthalten Daten, mit denen eine besonders effiziente Extrapolation mit minimaler Anzahl von Daten möglich ist, wodurch auch wiederum eine Reduktion des Übertragungs-Bandbreitenbedarfs erreicht wird.

Durch die Erstellung einer ständig aktualisierten Prioritätsliste und die Kontrolle der Auslastung des Übertragungssystems kann dessen Bandbreite optimal genutzt werden, da eine Auswahl der zu übertragenden Datensätze vorgenommen werden kann. Die Aktualisierung der Prioritätsliste kann in vorbestimmten Zeitabständen oder automatisch nach bekannten Verfahren vorgenommen werden.

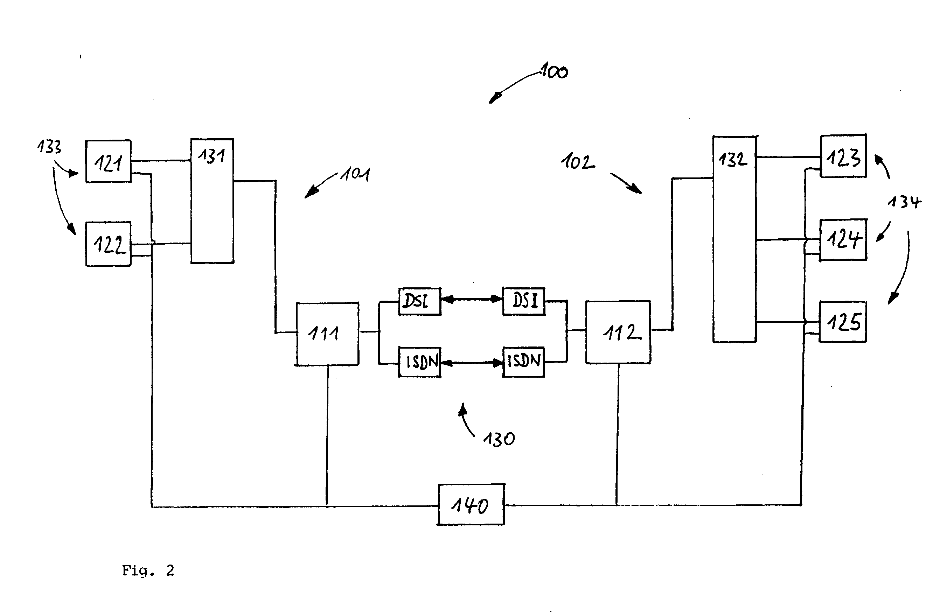

Im folgenden wird die Erfindung anhand des in der Figur 2 dargestellten Simulationssystems beschrieben:

Die Figur 2 zeigt ein Simulationssystem 100, in dem mehrere örtlich voneinander getrennte Flugsimulatoren in einem vorgegebenen Luftraum, z.B. in Gruppen mit- oder gegeneinander operieren. Die Figur 2 zeigt ein erstes 101 und ein zweites 102 Simulationszentrum. Beide Simulationszentren 101, 102 weisen jeweils ein Kommunikationsmodul oder einen Kommunikationsrechner 111 bzw. 112 auf, an die jeweils mehrere Simulationseinrichtungen 133 bzw. 134 mit den entsprechenden Schnittstellen (I/F) angeschlossen sind. Im ersten Simulationszentrum 101 sind an die diesen zugeordneten Simulationseinrichtungen 133 ein erster 121 und ein zweiter 122 Flugsimulator angeschlossen, der jeweils eine Flugzeugsimulation, Waffensystemsimulation, Cockpitsimulation, Außensichtsimulation, u.a. umfassen kann. An dem Kommunikationsrechner 112 des zweiten Simulationszentrums 102 sind als Simulationseinrichtungen ebenfalls zwei Flugzeugsimulatoren 123, 124 angeschlossen. In beiden Simulationszentren 101, 102 ist jeweils ein gemeinsamer Speicher (shared memory) 131 bzw. 132 vorgesehen, der jeweils mit dem Kommunikationsrechner 111 bzw. 112 und mit den zugehörigen Flugsimulatoren 121, 122 bzw. 123, 124, 125 verbunden ist. Über die gemeinsamen Speicher 131, 132 wird der Datenaustausch sowohl innerhalb der Simulationseinrichtungen 133 bzw. 134 als auch zwischen den Simulationseinrichtungen 113 und dem zugeordneten Kommunikationsrechner 111 durchgeführt. Zwischen dem ersten Simulationszentrum 101 und dem zweiten Simulationszentrum 102 ist eine Datenübertragungseinrichtung oder ein Übertragungssystem 130 vorgesehen, das mittels zumindest einem Übertragungsmedium Daten von einem Kommunikationsrechner zum anderen überträgt.

Die Kommunikationsrechner 111, 112 stehen mit einem Zeitgeber 140 in Verbindung.

Im folgenden wird die Funktionsweise des Simulationssystem nach der Fig. 2 beschrieben:

Die beiden Simulationszentren 101 und 102 arbeiten in Realzeit und sind räumlich möglicherweise weit voneinander entfernt aufgebaut. Dadurch können beispielsweise mit dem Simulationssystem 100 taktische Luftkampf-Manöver zweier gegnerischer Gruppen von Flugsimulatoren in einem vorgegebenen Szenario durchgeführt werden, wobei die jeweiligen fliegerischen oder taktischen Entscheidungen in jedem Simulationszentrum 101, 102 unabhängig voneinander getroffen werden können.

Die Flugsimulatoren 121, 122 und 123, 124, 125 liefern normalerweise kontinuierlich oder zu einer vorgegebenen Aktualisierungs- oder Iterationsrate sich über die Iterationsschritte ändernde Daten über ihren Zustand und die von ihren Funktionen errechnete Werte an den gemeinsamen Speicher 131 bzw. 132. So liefert die Flugzeugsimulation z.B. Informationen über die momentane Position, Geschwindigkeit, Beschleunigung, Winkelgeschwindigkeiten, Winkelbeschleunigungen des Flugzeugmodells sowie über dessen Lage und Richtung. Auch die Cockpiteinrichtungen 121, 122, 123, 124 liefern in der Aktualisierungsrate Daten an ihre zugeordneten Kommunikationsrechner 111 bzw. 112 über den Zustand des jeweiligen Flugzeugs, das mit der entsprechenden Cockpiteinrichtung in einer Simulation geflogen wird.

Weiterhin liefern die Flugsimulatoren 121, 122 und 123, 124, 125 quasi-statische Daten über Flugzeugtyp, evtl. dessen Untertypen, Status, Zugehörigkeit zu einem Verband sowie flugtechnische und taktische Parameter.

Die Waffensystemsimulation sendet quasi-statische Daten von Lenk-Flugkörpern, z.B. bezüglich Typ, evtl. Untertypen, Status wie z.B. Flugzustand oder erreichte Treffer, Zugehörigkeit zu einem Verband oder zu einem gewählten Ziel. An dynamischen Daten werden zum einen Lenkflugkörper-spezifische Daten an die gemeinsamen Speicher 131 bzw. 132 gesendet, und zwar vorzugsweise die Position und Geschwindigkeit des Flugkörpers. Zum anderen werden von der Waffensystem-Simulation Emissionsdaten, z.B. Radar- oder Stördaten (Jammer) und Simulationsdaten für Abwehrmaßnahmen an die jeweiligen gemeinsamen Speicher 131 bzw. 132 gesendet.

Die Kommunikationsrechner 111, 112 haben über den jeweiligen gemeinsamen Speicher 131 bzw. 132 Zugriff auf die Daten der Flugsimulatoren 121, 122 und 123, 124, 125.

Diejenigen Daten, die z.B. für die Cockpitsimulationen der Flugsimulatoren 123, 124, 125 des zweiten Simulationszentrums 102 in bezug auf das erste Simulationszentrum 101 relevant sind, werden von dem ersten 111 an den zweiten Kommunikationsrechner 112 geschickt.

Zur weiteren Darstellung der Funktionsweise wird im folgenden der Kommunikationsrechner 111 als der sendende Kommunikationsrechner betrachtet.

Der empfangende Kommunikationstrechner 112 empfängt die vom Kommunikationsrechner 111 gesendeten quasi-statischen und dynamischen Daten und extrapoliert aus diesen dynamischen Daten mit Anwendungsspezifischen Extrapolations-Algorithmen diese auf vorgegebene spätere Zeitpunkte, solange bis er einen neuen Datensatz von dem Kommunikationsrechner 111 erhält. Bei dieser Extrapolation wird die Zeitdauer für eine eventuelle Übertragung der Daten an Simulationseinrichtungen 134 eines anderen Simulationszentrums 102 eingerechnet. Die quasi-statischen Daten stellt der Kommunikationsrechner 112 über den gemeinsamen Speicher 132 den Simulationseinrichtungen 123, 124, 125 zur Verfügung.

Beide Kommunikationsrechner 111, 112, die den jeweils zugeordneten Simulationszentren 101, 102 angehören, haben diesselben spezifischen Extrapolations-Algorithmen implementiert und extrapolieren mit diesen parallel ausgehend von den versendeten bzw. empfangenen Daten Daten für spätere Zeitpunkte, wobei die Übertragungszeit für die jeweilige Übertragung zwischen den jeweiligen Simulationsrechnern eingerechnet wird. Der sendende Kommunikationsrechner 111 vergleicht die durch die Extrapolation gewonnen Daten mit den aktuellen von den zugeordneten Flugsimulatoren 121, 122 erzeugten und im gemeinsamen Speicher 131 vorliegenden Daten. Für den Fall, daß dieser Vergleich zu Differenzwerten führt, die größer sind als vorgegebene Schwellwerte, initiiert der Kommunikationsrechner 111 die Versendung der aktuellen Daten der Flugsimulatoren 121, 122 über das Datenübertragungssystem 130 an den Kommunikationsrechner 112. Diese aktuellen, übertragenen Daten bilden den neuen Ausgangspunkt für eine erneute Extrapolation.

Die tatsächliche Versendung erfolgt aufgrund der anhand der Figur 1 beschriebenen und kontinuierlich im Betrieb vom Kommunikationsrechner 111 aktualisierten Prioritätsliste, in der Einträge mit Verweisen auf entsprechende Datensätze aufgrund konkreter Kriterien, die sich im Verlauf eines Prozesses auch ändern können, in einer der Übertragungsreihenfolge entsprechenden Rangfolge angeordnet sind.

Die Positionen der entsprechenden Einträge des jeweiligen Simulationsrechners 121, 122 in der Prioritätsliste ermitteln sich im vorliegenden Anwendungsfall danach, mit welchem Betrag die Differenzwerte zwischen den aktuellen und den extrapolierten Daten einen vorgegebenen Schwellwert überschritten haben, welche Wichtigkeit die aktualisierten Daten besitzen und/oder eine eventuell vorgegebenen minimalen Aktualisierungsrate. Die Wichtigkeit von Daten bestimmt sich beispielsweise aufgrund der erforderlichen Rechengenauigkeit der Funktionen der Flugsimulatoren 121, 122. Beispielsweise werden Flugzeuge in Schußweite mit einer größeren Genauigkeit und damit größeren Wichtigkeit belegt als solche Objekte, die von einem Radar noch nicht erfaßt werden können. Auch können Flugzeugdaten, die von der Flugzeugsimulation erzeugt werden, eine größere Wichtigkeit als Flugkörperdaten haben, da zur Beschreibung des Flugwegs eines Flugzeugs normalerweise eine größere Genauigkeit erforderlich ist.

Um die Menge der von dem Kommunikationsrechner 111 über das Übertragungssystem 130 geschickten Daten zu kontrollieren und zu steuern, können die Schwellwerte für den Vergleich zwischen den extrapolierten und den aktualisierten Daten von den jeweiligen Kommunikationsrechner 111 modifiziert werden. Dazu werden beispielsweise für Flugkörper als Initialisierungsparameter eine untere und eine obere Grenze für Schwellwerte in Bezug auf den Positions- und Geschwindigkeitsvektor verwendet.

Die an den Kommunikationsrechner 112 geschickten Daten werden in Form von definierten Datensätzen übermittelt, die von der Funktion der Flugsimulatoren 121, 122 abhängt, die diese Datensätze erzeugen, also z.B. von der Flugsimulation oder der Waffensystem-Simulation. Beispielsweise sind folgende Datensätze im beschriebenen Anwendungsfall vorgesehen: ein Datensatz mit den genannten quasi-statischen Daten jeweils für ein simuliertes Flugzeug und jeweils für einen Flugkörper, der mindestens einmal im Verlauf des Lebenszyklus des betreffenden Objekts generiert und versendet wird; einen Datensatz mit den dynamischen Daten für jeweils eine Flugzeugsimulation, welcher in Abhängigkeit der vorgegebenen Schwellwerte zu versenden ist und der vorzugsweise die Position, Geschwindigkeit, Beschleunigung, Orientierung (in Quatemionen), Winkelgeschwindigkeit und Winkelbeschleunigung umfaßt; einen Datensatz mit den dynamischen Daten für jeweils einen von der Waffensystem-Simulation kontrollierten Flugkörper, der vorzugsweise dessen Position und Geschwindigkeit enthält; einen Datensatz mit Daten z.B. für Objekte wie Radar-Emissionen, Störsender-Simulationen von Abwehrmaßnahmen, wobei diese Daten in Form des entsprechenden Datensatzes entweder immer dann übermittelt werden, sobald sie erzeugt worden sind, oder in einem festen Zeitraster geschickt werden.

Bei der Versendung der Datensätze sowohl der quasi-statischen als auch der dynamischen sowie der sonstigen Daten werden diese Datensätze mit einer Kennung des generierenden Flugsimulators 121, 122 versehen. Zusätzlich erhalten die Datensätze der dynamischen Daten einen Zeitstempel.

Durch die Verwendung von Quaternionen zur Beschreibung der Orientierung von simulierten Objekten ist eine besonders effiziente Extrapolation dieser Daten möglich. Dadurch ist einerseits eine Datenreduktion bei gleichzeitiger Einhaltung vorgegebener Fehlertoleranzgrenzen möglich. Andererseits kann bei der Übertragung der gleichen Datenmenge, als sie ohne dem erfindungsgemäßen Verfahren beim Stand der Technik übertragen wird, eine bessere Qualität der durch die Anwendungsprogramme aufgrund der jeweils innerhalb des Systems übertragenen Werte erzielt.

Es wird hervorgehoben, daß die Struktur der Datensätze spezifisch zur Beschreibung der simulierten Objekte gestaltet sind und gleichzeitig eine effiziente, d.h. mit relativ wenig Daten bewirkte Extrapolation erlaubt. Dadurch müssen bei einer entsprechenden Abweichung der extrapolierten von den aktuellen Daten auch nur wenige Daten an das empfangende Simulationszentrum übertragen werden.

Je Übertragungsschritt wird ein voranstehend beschriebenes Datensatzpaket an den zweiten Kommunikationsrechner 112 geschickt. Die Übertragung der gesamten ausgetauschten Daten muß bei dem erfindungsgemäßen Verfahren nicht getaktet erfolgen. Unter Übertragungsschritt wird dabei nur ein einzelner Übertragungsschritt verstanden. Um die Übertragungszeit zu berücksichtigen, die nur in einem Simulationssystem auftritt, nicht aber in der realen Wirklichkeit, werden die zu verschickenden Daten auf den Empfangszeitpunkt vorausgerechnet. Dabei wird die Übertragungszeit zugrunde gelegt, die in vorhergehenden Übertragungsschritten mittels des Zeitgebers 140 , also aufgrund eines dem jeweiligen Datensatz beim Absenden zugefügten Zeitstempel und den vom Zeitgeber an die entsprechenden Kommunikationsrechner übermittelten absoluten Zeiten, ermittelt worden ist.

Die voranstehenden Ausführngen beziehen sich auf die Funktionsweise des Simulationssystems für die Übertragung von dem Kommunikationsrechner 111 zu dem Kommunikationsrechner 112. In analoger Weise gelten sie auch für den umgekehrten Übertragungsvorgang.

In einer alternativen Ausführungsform des Luftraum-Simulationssystems 100 kann jedes Simulationzentrum 101, 102 auch mehr als zwei Kommunikationsrechner 111, 112 umfassen. Auch kann das erfindungsgemäße Luftraum-Simulationssystem 100 mehr als zwei Simulationszentren umfassen, die jeweils mindestens einen Kommunikationsrechner 111, 112 aufweisen.

Der anhand des ersten Kommunikationsrechner 101 beschriebene Zusammenhang von Funktionen ist vorzugsweise auch in den zweiten Kommunikationsrechner 112 sowie ggf. in den weiteren Kommunikationsrechnem implementiert.

Das erfindungsgemäße System kann beispielsweise auch zum Abgleich von Simulationen mit den entsprechenden realen Systemen, Geräten oder Fahrzeugen vorgesehen werden, wobei dann sowohl für die in das abzugleichende System als auch für die in das simulierte System einzuspeisenden Meßdaten jeweils diesselbe Zeitbasis verwendet werden muß.

## Patentansprüche

1. Verfahren zur Reduktion des Datendurchsatzes bei der Übertragung von zumindest teilweise veränderlichen, objektbezogenen Daten mittels eines Protokolls zwischen innerhalb von Zeitbedingungen über eine Datenübertragungseinrichtung (3;130) kommunizierenden Kommunikationsmodulen (10, 20; 111, 112), denen jeweils zumindest eine externe Einheit (11, 12, 13; 21, 22, 23; 121, 122; 123, 124, 125) zur Bereitstellung bzw. Nutzung der objektbezogenen Daten zugeordnet ist und die mit einem Zeitgeber (30, 140) in Verbindung stehen,
bei dem in dem jeweils sendenden Kommunikationsmodul (10, 20; 111, 112) eine zeitliche Extrapolation der zu versendenden Daten unter Berücksichtigung der Übertragungszeit erfolgt und ein Versenden der Daten an das jeweils empfangende Kommunikationsmodul (10, 20; 111, 112) initiiert wird, wenn ein aus den jeweils aktuellen Daten und den extrapolierten Daten gebildeter Vergleichswert eine Sollgröße erreicht oder überschreitet,
bei dem in einem jeweils empfangenden Kommunikationsmodul (10, 20; 111,112) eine zeitliche Extrapolation jeweils empfangener Daten mit dem selben Extrapolationsverfahren und eine Nutzung dieser Daten in einer zugeordneten externen Einheit erfolgt, wobei die als Basis der Extrapolation jeweils verwendeten empfangenen Daten durch jüngere Daten ersetzt werden, sobald diese von dem jeweils empfangenden Kommunikationsmodul empfangen worden sind, wobei bei der Extrapolation der empfangenen Daten durch das jeweils empfangende Kommunikationsmodul die Übertragungszeit für die Übertragung der Daten vom jeweils sendenden zu dem jeweils empfangenden Kommunikationsmodulen berücksichtigt wird.

2. Verfahren nach dem Anspruch 1, bei dem für den Vergleich zwischen den aktuellen und den extrapolierten Daten die Sollgröße während des Verfahrens eingestellt werden kann, wobei die für den jeweiligen Zeitpunkt zu versendende Datenmenge im Verhältnis zur verfügbaren Datenübertragungs-Bandbreite maßgebend ist.

3. Verfahren nach einem der voranstehenden Ansprüche, bei dem zur Festlegung der Reihenfolge, nach der die Daten in Form von Datensätzen versendet werden, eine laufend aktualisierte Prioritätsliste vorgesehen ist, die eine Anordnung von Verweisen auf die Datensätze umfaßt, nach der die Versendung der Datensätze erfolgt, wobei die Reihenfolge zum einen bestimmt wird durch eine Gewichtung des jeweiligen Datensatzes hinsichtlich dessen Bedeutung für die Funktionalität zumindest des versendenden Benutzerbereichs, und zum anderen durch die Zeitdauer, in der der Datensatz bis zum Zeitpunkt der Aktualisierung der Prioritätsliste nicht mehr verschickt worden ist.

4. Verfahren nach einem der voranstehenden Ansprüche, bei dem das Daten-erzeugende Kommunikationsmodul (10, 20; 111, 112) zu sendende Daten in bezug auf ein Objekt jeweils in einen Datensatz mit über verhältnismäßig lange Zeit unveränderlichen und in einen Datensatz mit im Verlaufe einer geringen Zahl von Iterationsschritten veränderlichen Daten formatiert, wobei der Datensatz mit den unveränderlichen Daten nach Zeitintervallen versendet die um ein Mehrfaches größer sind als die Zeitintervalle, nach der die veränderlichen Daten versendet werden, und wobei der Datensatz mit den veränderlichen Daten bei den Extrapolationen verwendet wird.

5. Verfahren nach einem der voranstehenden Ansprüche, bei dem die Extrapolationen mathematische Extrapolationen sind.

6. Verfahren nach einem der voranstehenden Ansprüche, bei dem der Vergleichswert ein Differenzwert und die Soligröße ein Schwellwert ist.

7. Einrichtung zur Reduktion des Datendurchsatzes bei der Übertragung von zumindest teilweise veränderlichen, objektbezogenen Daten mittels eines Protokolls zwischen innerhalb von Zeitbedingungen über eine Datenübertragungseinrichtung (3;130) kommunizierenden Kommunikationsmodulen (10, 20; 111, 112), denen jeweils zumindest eine externe Einheit (11, 12, 13; 21, 22, 23; 121, 122; 123, 124, 125) zur Bereitstellung bzw. Nutzung der objektbezogenen Daten zugeordnet ist und die mit einem Zeitgeber (30, 140) in Verbindung stehen,
wobei beide Kommunikationsmodule (10, 20; 111, 112) eine Funktion zur zeitlichen Extrapolation der zu versendenden und jeweils empfangener Daten unter Berücksichtigung der Übertragungszeit und zum Versenden der Daten an das jeweils empfangende Kommunikationsmodul (10, 20; 111, 112) umfassen, wenn ein aus den jeweils aktuellen Daten und den extrapolierten Daten gebildeter Vergleichswert eine Sollgröße erreicht oder überschreitet,
wobei beide Kommunikationsmodule (10, 20; 111,112) eine Funktion zur Nutzung dieser Daten in einer zugeordneten externen Einheit sowie eine Funktion umfassen, mit der die als Basis der Extrapolation jeweils verwendeten empfangenen Daten durch jüngere Daten ersetzt werden, sobald diese von einem jeweils empfangenden Kommunikationsmodul empfangen worden sind, wobei bei der Extrapolation der empfangenen Daten durch das jeweils empfangende Kommunikationsmodul die Übertragungszeit für die Übertragung der Daten vom jeweils sendenden zu dem jeweils empfangenden Kommunikationsmodulen berücksichtigt wird.

8. Einrichtung nach dem Anspruch 7, wobei die Einrichtung eine Simulationseinrichtung ist.

## Claims

1. Process for reducing the data throughput during the transmission of at least partially variable object-related data by means of a protocol between communication modules (10, 20; 111,112) which communicate with one another within time conditions by way of a data transmission device (3; 130), each communication module having assigned to it at least one external unit (11, 12, 13; 21, 22, 23; 121, 122; 123, 124, 125) for providing and utilizing the object-related data and each of which communication modules is connected with a timer (30, 140),
in which process a time-related extrapolation of the data to be sent is performed in the respective sending communication module (10, 20; 111, 112) taking into account the transmission time, and sending the data to the respective receiving communication module (10, 20; 111, 112) is initiated when a comparison value formed from the current data at any one time and the extrapolated data reaches or exceeds a desired quantity,
in which process in a respective receiving communication module (10, 20; 111; 112) a time-related extrapolation of data received is performed using the same extrapolation process and this data is used in an associated external unit, wherein the received data used as the basis of the extrapolation is replaced by more recent data as soon as this has been received by the respective receiving communication module, wherein during the extrapolation of the received data by the respective receiving communication module the transmission time for the transmission of data from the respective sending communication module to the respective receiving communication module is taken into account.

2. Process according to claim 1, in which the desired quantity for the comparison between the current and the extrapolated data can be adjusted during the process, based on the data quantity to be sent for the particular point in time relative to the available data transmission bandwidth.

3. Process according to any one of the preceding claims, in which for defining the sequence in which data is sent in the form of data sets, a continuously updated priority list is provided, which comprises an arrangement of references to the data sets according to which the data sets are sent, wherein the sequence is determined on the one hand by a weighting of the respective data set in terms of its significance for the functionality at least of the sending user area, and on the other hand by the time duration within which the data set has no longer been sent until updating of the priority list.

4. Process according to any one of the preceding claims, in which the data-producing communication module (10, 20; 111, 112) formats object-related data to be sent into a data set having data which is invariable for a relatively long time, and into a data set having data which is variable in the course of a small number of iteration steps, wherein the data set having the invariable data is sent according to time intervals which are several times larger than the time intervals according to which the variable data is sent, and wherein the data set having the variable data ist used for the extrapolations.

5. Process according to any one of the preceding claims, in which the extrapolations are mathematical extrapolations.

6. Process according to any one of the preceding claims, in which the comparison value is a differential value and the desired quantity is a threshold value.

7. Device for reducing the data throughput during the transmission of at least partially variable object-related data by means of a protocol between communication modules (10, 20; 111,112) which communicate with one another within time conditions by way of a data transmission device (3; 130), each communication module having assigned to it at least one external unit (11,12,13; 21, 22, 23; 121, 122; 123,124,125) for providing and utilizing the object-related data, and each of which communication modules is connected with a timer (30, 140),
wherein both communication modules (10, 20; 111, 112) include a function for a time-related extrapolation of the data to be sent and the data received respectively taking into account the transmission time and for sending the data to the respective receiving communication module (10, 20; 111, 112), when a comparison value formed from the current data at any one time and the extrapolated data reaches or exceeds a desired quantity,
wherein both communication modules (10, 20; 111; 112) include a function for utilizing this data in an associated extemal unit and a function with which the received data used as the basis of the extrapolation is replaced by more recent data as soon as this has been received by a respective receiving communication module, wherein during the extrapolation of the received data by the respective receiving communication module the transmission time for the transmission of data from the respective sending to the respective receiving communication modules is taken into account.

8. Device according to claim 7, wherein the device is a simulation device.

## Revendications

1. Procédé pour réduire le débit binaire lors de la transmission de données objet au moins partiellement variables au moyen d'un protocole entre des modules de communication (10, 20; 111, 112) communiquant à l'intérieur de conditions temporelles au moyen d'un dispositif de transmission de données (3 ; 130), modules auxquels est associée respectivement au moins une unité externe (11, 12, 13 ; 21, 22, 23 ; 121, 122 ; 123, 124, 125) pour la mise à disposition ou l'utilisation des données objet et qui sont en liaison avec un générateur de rythme (30, 140),
dans lequel a lieu, dans le module de communication respectivement émetteur (10, 20 ; 111, 112), une extrapolation temporelle des données à envoyer en tenant compte du temps de transmission, et une émission des données est initiée vers le module de communication respectivement récepteur (10, 20 ; 111, 112), lorsqu'une valeur comparative formée à partir des données actuelles respectives et des données extrapolées atteint ou dépasse une taille théorique,
dans lequel a lieu, dans un module de communication respectivement récepteur (10, 20 ; 111, 112), une extrapolation temporelle respectivement des données reçues avec le même procédé d'extrapolation et une utilisation de ces données dans une unité externe associée, les données reçues respectivement utilisées comme base de l'extrapolation étant remplacées par des données plus récentes, dès que celles-ci ont été reçues par le module de communication respectivement récepteur, le temps de transmission pour la transmission des données entre les modules de communication respectivement émetteur et respectivement récepteur étant pris en compte lors de l'extrapolation des données reçues par le module de communication respectivement récepteur.

2. Procédé selon la revendication 1,
dans lequel
la taille théorique pour la comparaison entre les données actuelles et les données extrapolées peut être réglée pendant le procédé, le flot de données à émettre au moment respectif étant déterminant par rapport à la largeur de bande de transmission de données disponible.

3. Procédé selon l'une quelconque des revendications précédentes,
dans lequel
on prévoit une liste de priorités constamment actualisée pour déterminer la séquence selon laquelle les données sont envoyées sous forme de blocs de données, liste de priorités qui comprend un dispositif de renvoi aux blocs de données, selon lequel a lieu l'émission des blocs de données, la séquence étant définie d'une part par une pondération du bloc de données respectif au regard de sa signification pour la fonctionnalité d'au moins le domaine utilisateur émetteur, et d'autre part par la durée pendant laquelle le bloc de données n'a plus été émis jusqu'au moment de l'actualisation de la liste de priorités.

4. Procédé selon l'une quelconque des revendications précédentes,
dans lequel
le module de communication (10, 20 ; 111, 112) créant des données en données à émettre relatives à un objet formate respectivement des données non variables dans un bloc de données avec un temps relativement long, et formate des données variables dans un bloc de données au cours d'un nombre réduit d'étapes itératives, le bloc de données avec les données non variables étant émis après des intervalles de temps plusieurs fois supérieurs aux intervalles de temps après lesquels les données variables sont émises, et le bloc de données avec les données variables étant utilisé lors des extrapolations.

5. Procédé selon l'une quelconque des revendications précédentes,
dans lequel
les extrapolations sont des extrapolations mathématiques.

6. Procédé selon l'une quelconque des revendications précédentes,
dans lequel
la valeur comparative est une valeur différentielle et la taille théorique est une valeur seuil.

7. Dispositif pour réduire le débit binaire lors de la transmission de données objet au moins partiellement variables au moyen d'un protocole entre des modules de communication (10, 20; 111, 112) communiquant à l'intérieur de conditions temporelles au moyen d'un dispositif de transmission de données (3 ; 130), modules auxquels est associée respectivement au moins une unité externe (11, 12, 13 ; 21, 22, 23 ; 121, 122 ; 123, 124, 125) pour la mise à disposition ou l'utilisation des données objet et qui sont en liaison avec un générateur de rythme (30, 140),
les deux modules de communication (10, 20; 111, 112) comprenant une fonction pour l'extrapolation temporelle des données à envoyer et respectivement des données reçues en tenant compte du temps de transmission, et une fonction pour envoyer des données vers le module de communication (10, 20; 111, 112) respectivement récepteur, lorsqu'une valeur comparative formée à partir des données actuelles respectives et des données extrapolées atteint ou dépasse une taille théorique,
les deux modules de communication (10, 20; 111, 112) comprenant une fonction pour l'utilisation de ces données dans une unité externe associée, ainsi qu'une fonction avec laquelle les données reçues respectivement utilisées comme base de l'extrapolation sont remplacées par des données plus récentes, dès que celles-ci ont été reçues par un module de communication respectivement récepteur, le temps de transmission pour la transmission des données entre les modules de communication respectivement émetteur et respectivement récepteur étant pris en compte lors de l'extrapolation des données reçues par le module de communication respectivement récepteur.

8. Dispositif selon la revendication 7, le dispositif étant un dispositif de simulation.
